# EUROPEAN PATENT APPLICATION

(11) **EP 3 708 009 A1**
(43) Date of publication of application: **16.09.2020**
(21) Application number: 19382188.1
(22) Date of filing: 15.03.2019
(51) Int. Cl.: A23P 20/13

(54) **ROTARY DEVICE FOR BATTERING FOOD PRODUCTS**

(71) Applicant: Industria de Maquinaria Para la Alimentación S.L., 08349 Cabrera de Mar (Barcelona) (ES)
(72) Inventor: Arjona Imañas, Jorge Miguel, 08349 Cabrera de Mar (Barcelona) (ES)
(74) Representative: Sahuquillo Huerta, Jesús

(57) **Abstract**

A rotating drum for coating food products, applicable for coating by means of the use of liquid and powdered solid products, which comprises two cylinders connected together, forming a first zone with a greater diameter (8) and a second zone with a smaller diameter (9), wherein the second zone with a smaller diameter (9) has a length L₂ greater than the length L₁ of the first zone with a greater diameter (8); and wherein both zones (8,9) house in their interior a first coil (1) and a second coil (2), both internal coils (1,2) being configured to house in the interior of the cylinder where they are located, such that the first coil (1) with a smaller diameter is located in the second zone with a smaller diameter (9) and the second coil (2) with a greater diameter is located in the first zone with a greater diameter (8); wherein the zone with a greater diameter (8) and the zone with a smaller diameter (9) are each tubular elements made up of a sole piece and which comprise, respectively, a plurality of longitudinal cuts or grooves (3) and (4) distributed regularly in at least one part of their respective surfaces.

## Description

This invention, as expressed in the heading of this description, refers to a rotating drum configured for coating food products in accordance with claim 1. More specifically, the object of this invention is a rotating dosing drum whose purpose consists in allowing the coating of food products by means of liquids, bread, flour or derivatives.

The technical field of this invention falls within the technical sector dedicated to the manufacture of machinery for the production of food products.

### State of the prior art

With reference to the state of the prior art, it should be noted that the applicant himself is the holder of two Spanish utility models, with publication numbers ES1051530U and ES1075819U, which describe rotating drums for the coating of food products like the one described in this invention, but which have been suitably improved to solve the technical problems indicated below.

Hence, document ES1051530U describes a dosing drum, of the type destined to be used as elements applicable for the coating of food products by means of the use of liquid and solid products, characterised through being constituted from a significantly elongated cylindrical body that disposes, at its edges, of flanges where gears or mobilising elements of the drum are adapted, presenting two zones of different diameters, having a first zone with a greater diameter than the second zone and incorporating in the internal part of the first zone, a first coil and a second coil on the outside, there existing in the second zone and, specifically, inside the same, a third coil. However, the drum described herein presents problems when it comes to repairs or replacing parts or elements that comprise it, making repair and cleaning tasks complex.

On the other hand, document ES1075819U describes a rotating drum for coating food products, applicable for coating by means of the use of liquid and powdered solid products, being of the type comprising a cylinder with a zone with a greater diameter with rods and a zone with a smaller diameter with walls, and a portion of shaped rods, both disposing of interior coils and an external coil for the one with the greater diameter, and whose rotation is produced by means of being connected at its edges to a transmission system, at the edge of the zone with a smaller diameter, the existence of a first flange is envisaged and, at the edge of the zone with a greater diameter, a removable set made up of a second flange and a silicone seal between which a toothed belt is fitted.

Document ES1075819U presents a series of advantages compared to document ES1051530U. Hence, it has the advantage of incorporating a coupling to gearing elements at one of its edges that enables it to be removed to facilitate its replacement and repair.

Notwithstanding, the devices described in both utility models have the technical problem of containing a plurality of independent elements welded to one another, which implies the existence of a multitude of gaps and spaces where dirt accumulates easily, which should be avoided at all cost for health and hygiene reasons for these types of devices.

### Description of the invention

An object of this invention is a rotating drum for coating food products in accordance with claim 1. Particular or preferred embodiments of the object of the invention are described in the dependent claims.

The rotating drum of claim 1, by contrast to those described in the state of the prior art, is shorter in length so that it is more manageable and weighs less, such that it can be introduced into most washers on the market for its better cleaning. However, the main modification of the invention with respect to the devices described in the state of the prior art refers to its structure, which minimises the number of parts to be used and improves the cleaning and hygiene of the device since corners and welds, which may have given rise to food contamination problems, are avoided.

The drum that is the object of the invention continues to be based on an elongated cylindrical body that presents two zones of different diameters, disposing of two interior coils, each adapted to the interior of the body in which it is located but, by contrast to the drums described in the state of the prior art, wherein the zones with a greater diameter comprise a plurality of straight welded rods, in the device that is the object of the invention, the body is manufactured in a sole piece since it is constituted based on a tube cut by laser, avoiding the use of rods.

The zone with a cylinder with a smaller diameter is slightly longer than the zone with a greater diameter and is partially closed by means of walls but, in the place of shaped rods occupying a portion of it in its middle zone, just like the zone with a greater diameter, is now manufactured in a sole piece from a tube cut by laser, avoiding the use of rods.

Furthermore, the drum of the invention avoids the use of the left support flange situated at the edge of the zone with a smaller diameter whereas, in the state of the prior art, a silicone seal was stuck, which should be changed fairly regularly and required maintenance. By contrast, a new flange has been added in the grooved part of said zone such that the paste used in the coating - whether liquid egg, powder, milk or others - decants and does not continue advancing through the interior of the drum, thus causing it to fall back into its storage container.

The external part of the zone of the drum that presents a greater diameter has an external coil which moves in the opposite direction to the two internal coils situated in both zones of the cylinder, said external coil having the mission of moving the powdered food product that is applied as part of the second coating phase, in other words, breadcrumbs, flour or derivatives, in a rotation operation.

Throughout the description and the claims, the word «comprises» and its variants do not purport to exclude other technical characteristics, additives, components or steps. For those skilled in the art, other objects, benefits and characteristics of the invention will be deduced partly from the invention and partly from putting the invention into practice. The following examples and drawings are provided for illustrative purposes and do not purport to restrict this invention. Furthermore, the invention covers all possible combinations of particular and preferred embodiments indicated herein.

### Brief description of the drawings

The following very briefly describes a series of drawings that help to understand the invention better and relate expressly to one embodiment of said invention, which is illustrated as a non-limiting example of it.

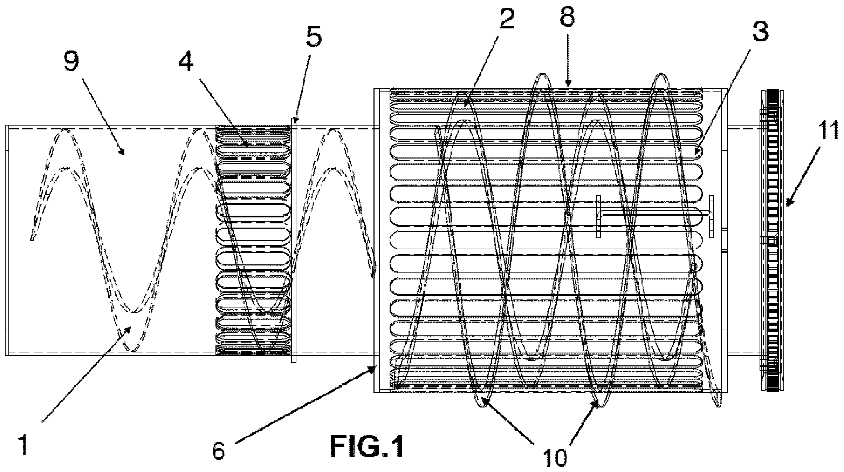

FIG.1 shows a longitudinal cross-sectional view of the rotating drum for coating food products, that is the object of this invention, showing the main parts and elements comprising it, as well as the configuration and disposition of the different parts it is made up of.

### Detailed description of one embodiment of the invention

As can be seen in the enclosed figures, the drum that is the object of the invention comprises a cylinder with two differentiated zones: a first zone with a greater diameter (8) and a second zone with a smaller diameter (9), wherein the second zone with a smaller diameter (9) has a length L₂ greater than length L₁ of the first zone with a greater diameter (8). Both zones (8,9) house in their interior a first coil (1) and a second coil (2), both internal coils (1,2) being configured to be housed in the interior of the zone of the cylinder where it is located, such that the first coil (1) with a smaller diameter is located in the second zone with a smaller diameter (9) and the second coil (2) with a greater diameter is located in the first zone with a greater diameter (8).

The zone with a smaller diameter (9) incorporates the liquids of the first phase of coating the products, which, when they exceed the length of said zone with a smaller diameter, pass to the zone with a greater diameter (8) where they will be subject to a second phase of coating with the powdered product, which is stirred with the external coil (10) envisaged in said zone and which moves in the opposite direction to the two internal coils (1 and 2).

The zone with a greater diameter (8) is made up of a sole body cut by laser from a tube and which presents a plurality of longitudinal grooves (3) to enable the passage of the products in said second coating phase. On the other hand, the zone with a smaller diameter (9) is made up of a sole tubular body, on which a plurality of grooves (4) have been applied and which has a flange (5) arranged downstream of the grooves (4) in the side adjacent to the zone with a greater diameter (8). This flange has the distinguishing feature of being configured to ensure that the paste used in the coating -whether liquid egg, powder, milk or others- decants and does not continue advancing along the interior of the drum, thus causing it to fall back into its storage container -not shown in the enclosed figure-.

To avoid spillage during said second phase, in the middle zone of the drum, where the zone with a greater diameter (8) connects to the one with a smaller diameter (9) a flange (6) is envisaged that acts as a retainer, preventing spillage of the powdered product.

Finally, to allow the drum to be connected to a transmission system and to procure its rotation, the existence of a transmission set (11) is envisaged at the outlet, at the edge of the zone with a greater diameter (8). Said transmission set comprises two flanges connected together with screws (12) and between which, a toothed belt is fitted.

## Claims

1. A rotating drum for coating food products, applicable for coating by means of the use of liquid and powdered solid products, which comprises two cylinders connected together, forming a first zone with a greater diameter (8) and a second zone with a smaller diameter (9), wherein the second zone with a smaller diameter (9) has a length L₂ greater than the length L₁ of the first zone with a greater diameter (8); and wherein both zones (8,9) house in their interior a first coil (1) and a second coil (2), both internal coils (1,2) being configured to be housed inside the zone of the cylinder where it is located, such that the first coil (1) with a smaller diameter is located in the second zone with a smaller diameter (9) and the second coil (2) with a greater diameter is located in the first zone with a greater diameter (8); **characterised in that** the zone with a greater diameter (8) and the zone with a smaller diameter (9) are each tubular elements made up of a sole piece and which comprise, respectively, a plurality of longitudinal cuts or grooves (3) and (4) distributed regularly in at least one part of their respective surfaces.

2. The rotating drum for coating food products according to claim 1 wherein the zone with a smaller diameter (9) is configured to incorporate the liquids of a first phase of coating the products, which, once the length L₂ of said zone with a smaller diameter (9) has been exceeded, pass to the zone with a greater diameter (8) where they will be subjected to a second coating phase with a powdered product, which is stirred with an external coil (10) envisaged in said zone with a greater diameter (8) and which moves in the opposite direction to the two internal coils (1 and 2).

3. The rotating drum for coating food products according to claim 1 or claim 2 wherein the zone with a smaller diameter (9) is made up of a sole tubular piece, on which a plurality of grooves (4) have been applied and which has a flange (5) disposed downstream of the grooves (4) in the side adjacent to the zone with a greater diameter (8) wherein said flange (5) is configured to enable the paste used in the coating to decant and to not continue moving along the interior of the drum, thus causing it to fall back into its storage container.

4. A rotating drum for coating food products according to one of the previous claims wherein, in the middle zone, where the zone with a greater diameter (8) connects to the one with a smaller diameter (9), a flange (6) configured as a retainer, preventing spillage of the powdered product, is envisaged.

## Amended claims

### Amended claims in accordance with Rule 137(2) EPC.

1. A rotating drum for coating food products, applicable for coating by means of the use of liquid and powdered solid products, which comprises two cylinders connected together, forming a first zone with a greater diameter (8) and a second zone with a smaller diameter (9), wherein the second zone with a smaller diameter (9) has a length L₂ greater than the length L₁ of the first zone with a greater diameter (8); and wherein both zones (8,9) house in their interior a first coil (1) and a second coil (2), both internal coils (1,2) being configured to be housed inside the zone of the cylinder where it is located, such that the first coil (1) with a smaller diameter is located in the second zone with a smaller diameter (9) and the second coil (2) with a greater diameter is located in the first zone with a greater diameter (8); **characterised in that** the zone with a greater diameter (8) and the zone with a smaller diameter (9) are each tubular elements made up of a sole piece and which comprise, respectively, a plurality of longitudinal cuts or grooves (3) and (4) distributed regularly in at least one part of their respective surfaces;
wherein the zone with smaller diameter (9) is made of a sole tubular piece on which a plurality of grooves (4) have been applied and which has a flange (5) disposed downstream of the grooves (4) in the side adjacent to the zone with a greater diameter (8) wherein said flange (5) is configured to enable the paste used in the coating to decant and to not continue moving along the interior of the drum, thus causing it to fall back into its storage container;
and wherein the zone with a smaller diameter (9) is further configured to incorporate the liquids of a first phase of coating the products, which, once the length L₂ of said zone with a smaller diameter (9) has been exceeded, pass to the zone with a greater diameter (8) where the products will be subjected to a second coating phase with a powdered product, which is stirred with an external coil (10) envisaged in said zone with a greater diameter (8) and which moves in the opposite direction to the two internal coils (1 and 2).

2. A rotating drum for coating food products according to claim 1 wherein, in the middle zone, where the zone with a greater diameter (8) connects to the one with a smaller diameter (9), a flange (6) configured as a retainer, preventing spillage of the powdered product, is envisaged.
